# EUROPEAN PATENT APPLICATION

(11) **EP 4 811 447 A1**
(43) Date of publication of application: **23.09.2026**
(21) Application number: 25857477.1
(22) Date of filing: 21.08.2025
(51) Int. Cl.: H01M 4/36, H01M 4/525, H01M 4/505, H01M 4/131, H01M 10/0562, H01M 10/052, H01M 10/0585, H01M 4/02

(54) **POSITIVE ELECTRODE ACTIVE MATERIAL FOR ALL-SOLID-STATE BATTERY, AND POSITIVE ELECTRODE AND ALL-SOLID-STATE BATTERY COMPRISING SAME**

(30) Priority: 21.08.2024 KR 20240112108; 20.08.2025 KR 20250115634
(71) Applicant: LG Energy Solution, Ltd., Seoul 07335 (KR)
(72) Inventor: KANG, Sora, Daejeon 34122 (KR); KWON, Hyejin, Daejeon 34122 (KR); LEE, Choonghyeon, Daejeon 34122 (KR); KIM, Myeongsoo, Daejeon 34122 (KR); CHOI, Seokin, Daejeon 34122 (KR); OH, Kyungbae, Daejeon 34122 (KR); PARK, Mihui, Daejeon 34122 (KR); LEE, Junho, Daejeon 34122 (KR)
(74) Representative: Goddar, Heinz J.
(86) International application number: PCT/KR2025/012663
(87) International publication number: WO 2026/043289

(57) **Abstract**

The present disclosure relates to a positive electrode active material for an all-solid-state batterie, and a positive electrode and an all-solid-state battery comprising same, and more particularly, the positive electrode active material for the all-solid-state batterie comprises a core particle comprising a positive electrode core active material in the form of a secondary particle and an amorphous coating layer formed on the surface of the core particle, so that the porosity of the positive electrode active material for the all-solid-state batterie itself is minimized, and therefore, when applied to the positive electrode, it can reduce the porosity of the positive electrode, thereby improving the output of the all-solid-state battery.

## Description

### [Technical Field]

### Cross-Citation with Related Applications

This application claims the benefit of priority to Korean Patent Application No. 10-2024-0112108, filed August 21, 2024, and Korean Patent Application No. 10-2025-0115634, filed August 20, 2025, the disclosures of which are incorporated herein by reference in their entirety.

### Technical Field

The present disclosure relates to a positive electrode active material for all-solid-state batteries, and a positive electrode and an all-solid-state battery comprising same.

### [Related Art]

A variety of batteries are being researched to overcome the limitations of the current lithium secondary batteries in terms of capacity, safety, output, large-scale applications, and microminiaturization.

Representative examples include metal-air batteries, which have a very high theoretical capacity compared to lithium secondary batteries, in terms of capacity; all-solid-state batteries, which have no risk of explosion, in terms of safety; supercapacitors in terms of output; NaS batteries or redox flow batteries (RFB) in terms of large-scale applications; and thin film batteries in terms of microminiaturization. Continuous research is being conducted in academia and industry on these technologies.

An all-solid-state battery is a battery in which the liquid electrolyte used in a conventional lithium secondary battery is replaced with a solid electrolyte, and since no flammable solvent is used in the battery, there is no possibility of ignition or explosion due to the decomposition reaction of the conventional electrolyte, which greatly improves safety. In addition, among all-solid-state batteries, technology development is continuing for sulfide-based all-solid-state batteries, which have a high ionic conductivity of solid electrolyte and can realize a high energy density of at least 900 Wh/L in theory. A sulfide-based all-solid-state battery refers to an all-solid-state battery containing a sulfide-based solid electrolyte.

In an all-solid-state battery system, lithium ions are not conducted by the liquid electrolyte contained in a conventional lithium-ion battery (LIB). Therefore, when manufacturing a positive electrode for sulfide-based all-solid-state batteries, it is necessary to increase the contact interface between the positive electrode active material and the sulfide-based solid electrolyte particles by adding sulfide-based solid electrolyte particles with a small diameter inside the positive electrode to increase the conductivity of lithium ions. In addition, to improve energy density, the physical contact between the positive electrode active material, sulfide-based solid electrolyte particles, and other cell elements in the positive electrode must be enhanced, and the porosity of the positive electrode after rolling must be reduced, which must be maintained during charge and discharge.

Unlike liquid electrolytes, solid electrolytes have no fluidity and cannot penetrate between positive electrode active material particles, leaving the pores formed between the positive electrode active material particles as dead areas and thereby reducing the output of the all-solid-state battery.

Therefore, there is a continuous need to develop technologies that can further reduce the porosity at the positive electrode of all-solid-state batteries to improve the performance of all-solid-state batteries.

### [Prior Art Reference]

### [Patent Reference]

(Patent Reference 1) Chinese Patent Publication No. 117613259

### [Detailed Description of the Invention]

### [Technical Problem]

The inventors of the present disclosure have conducted a multifaceted study to solve the above problem and have confirmed that when a positive electrode active material comprising a core particle comprising a secondary particle (poly particle) agglomerated from a plurality of positive electrode core active materials in the form of primary particles, and an amorphous coating layer located on the surface of the core particle is applied to the positive electrode, the porosity of the positive electrode can be reduced and the output of the all-solid-state battery can be improved.

Accordingly, it is an object of the present disclosure to provide a positive electrode active material for all-solid-state batteries having a form capable of reducing the porosity of the positive electrode.

Another object of the present disclosure is to provide a positive electrode for all-solid-state batteries comprising a positive electrode active material for all-solid-state batteries having a form capable of reducing the porosity of the positive electrode.

It is another object of the present disclosure to provide an all-solid-state battery comprising a positive electrode active material having a form capable of reducing the porosity of the positive electrode.

### [Technical Solution]

To accomplish the above objectives, the present disclosure provides a positive electrode active material for all-solid-state batteries comprising a core particle; and an amorphous coating layer located on the surface of the core particle,
wherein the core particle is in the form of a secondary particle agglomerated from a plurality of positive electrode core active materials in the form of a primary particle,
wherein the amorphous coating layer comprises a compound comprising at least two selected from the group consisting of Li, M, and O, wherein M comprises at least one selected from the group consisting of B, Zr, Nb, Ti, Al, W, P, Fe, C, N, Si, P, S, Co, Ge, Ga, Y and In.

In one example of the present disclosure, there is provided a positive electrode active material for all-solid-state batteries, wherein the compound comprises at least one selected from the group consisting of LiO, MO, LiM, and LiMO.

In one example of the present disclosure, there is provided a positive electrode active material for all-solid-state batteries, wherein the amorphous coating layer has a thickness of 5 nm to 200 nm.

In one example of the present disclosure, there is provided a positive electrode active material for all-solid-state batteries, wherein the particle diameter (D50) of the positive electrode active material for all-solid-state batteries is 3 µm to 5 µm.

In one example of the present disclosure, a positive electrode active material for all-solid-state batteries is provided, wherein the span ((D90-D10)/D50) of the positive electrode active material for all-solid-state batteries is 0.7 or less.

In one example of the present disclosure, there is provided a positive electrode active material for all-solid-state batteries, wherein the positive electrode core active material comprises a lithium composite metal oxide.

In one example of the present disclosure, a positive electrode active material for all-solid-state batteries is provided, wherein the porosity of the positive electrode active material for all-solid-state batteries is 7% or less.

The present disclosure also provides a positive electrode for all-solid-state batteries comprising the above positive electrode active material.

In one example of the present disclosure, a positive electrode for all-solid-state batteries is provided, wherein the positive electrode comprises the above positive electrode active material, a sulfide-based solid electrolyte, a binder, and a conductive material.

The present disclosure also provides an all-solid-state battery comprising a positive electrode, a negative electrode, and a sulfide-based solid electrolyte film interposed therebetween.

### [Advantageous Effects]

The positive electrode active material for all-solid-state batteries according to the present disclosure includes a core particle in the form of a secondary particle agglomerated from a plurality of primary particles of positive electrode core active material, and an amorphous coating layer formed on the surface of the core particle, which has the effect of reducing the porosity of the positive electrode and improving the output characteristics of the all-solid-state battery.

### [Brief Description of Drawing]

FIG. 1 is a schematic cross-sectional view illustrating the interface of a positive electrode active material and a sulfide-based solid electrolyte, according to one example of the present invention.
FIG. 2 is an X-ray diffraction (XRD) graph of a positive electrode active material according to Example 1 of the present invention.

### [Best Mode]

Hereinafter, the present disclosure will be described in more detail to provide a better understanding.

The terms and words used in this specification and claims are not to be construed in their ordinary or dictionary sense, but rather in a sense and concept consistent with the technical idea of the present disclosure, based on the principle that the inventor may define the terms appropriately in order to best explain his/her invention.

As used herein, the term "positive electrode core active material" refers a substance that generates electrical energy by chemical reactions at the positive electrode of a battery, which has the same concept as the "positive electrode active material." To distinguish between the material contained in the core particle and the material comprising the core particle and the amorphous coating layer, the former is referred to as the positive electrode core active material, and the latter is referred to as the positive electrode active material.

As used herein, the term "primary particle" refers to a single particle. The primary particle is a primary particle of the positive electrode core active material.

As used herein, the term "secondary particle" refers to a poly particle formed by the agglomeration from a plurality of primary particles. The secondary particle is a secondary particle of the positive electrode core active material.

### Positive Electrode Active Material for All-solid-state Batteries

The present disclosure relates to a positive electrode active material for all-solid-state batteries.

A positive electrode active material for all-solid-state batteries according to the present disclosure comprises a core particle; and an amorphous coating layer located on the surface of the core particle,
wherein the core particle is in the form of a secondary particle agglomerated from a plurality of positive electrode core active materials in the form of a primary particle,
wherein the amorphous coating layer comprises a compound comprising at least two selected from the group consisting of Li, M, and O, wherein M comprises at least one selected from the group consisting of B, Zr, Nb, Ti, Al, W, P, Fe, C, N, Si, S, Co, Ge, Ga, Y and In.

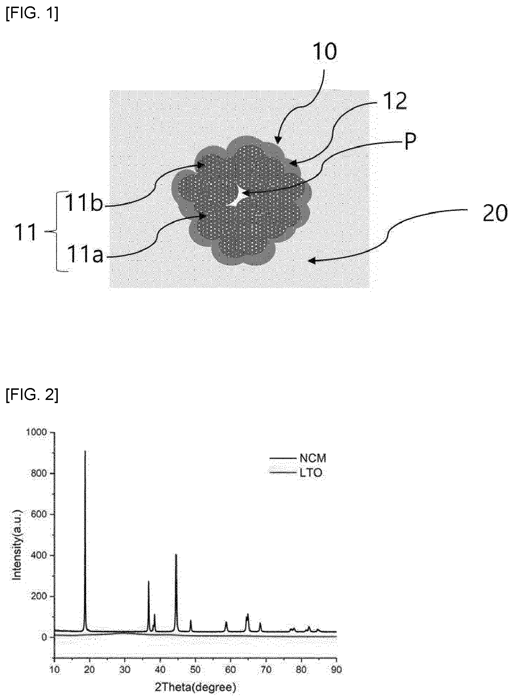

FIG. 1 is a schematic cross-sectional view illustrating the interface of a positive electrode active material and a sulfide-based solid electrolyte, according to one example of the present disclosure.

Referring to FIG. 1, the positive electrode core active material contained in the core particle (11) of the positive electrode active material (10) is in the form of a secondary particle (11b) agglomerated from a plurality of primary particles (11a), which can reduce the porosity of the positive electrode compared to a positive electrode containing only positive electrode active material in the form of a primary particle, thereby improving the output characteristics of the all-solid-state battery. Furthermore, since an amorphous coating layer (12) is formed on the surface of the core particle (11) including the secondary particle (11b), side reactions between the positive electrode core active material contained in the core particle (11) and the sulfide-based solid electrolyte (20) are also prevented, which can improve the output characteristics and life characteristics of the all-solid-state battery. In addition, pores (P) are formed inside the secondary particle (11b), but the secondary particle (11b) is in the form of agglomeration of the primary particles (11a), so that the porosity of the positive electrode active material (10) itself in the form of the secondary particle (11b) is maintained below a certain level.

In one example of the present disclosure, the amorphous coating layer may comprise a compound comprising at least two selected from the group consisting of Li, M, and O, wherein M comprises at least one selected from the group consisting of B, Zr, Nb, Ti, Al, W, P, Fe, C, N, Si, S, Co, Ge, Ga, Y and In.

A positive electrode for all-solid-state batteries can include a sulfide-based solid electrolyte together with a positive electrode active material. The amorphous coating layer is a part in direct contact with the sulfide-based solid electrolyte, which can prevent side reactions at the interface between the positive electrode active material and the sulfide-based solid electrolyte, thereby inhibiting the generation of resistance, and eventually improving the output of the all-solid-state battery.

Further, the amorphous coating layer may form a uniform coating layer compared to the crystalline coating layer. The uniformly formed amorphous coating layer can further improve the output and lifetime of all-solid-state batteries. Since a crystalline coating layer is formed in the form of an island rather than a full coating on the core particle, it is not possible to form a uniform coating layer.

Furthermore, the compound may comprise at least one selected from the group consisting of LiO, MO, LiM and LiMO. The M may comprise at least one selected from the group consisting of B, Zr, Nb, Ti, Al, W, P, Fe, C, N, Si, S, Co, Ge, Ga, Y and In.

Further, the thickness of the amorphous coating layer may be 5 nm to 200 nm. If the thickness of the amorphous coating layer is less than 5 nm, side reactions between the positive electrode active material and the sulfide-based solid electrolyte may occur, and if the thickness exceeds 200 nm, this excessively thick layer may act as a resistance component. Specifically, the thickness of the amorphous coating layer may be 5 nm or more, 10 nm or more, 15 nm or more, 20 nm or more, 25 nm or more, 30 nm or more, 35 nm or more, 40 nm or more, or 45 nm or more, 200 nm or less, 190 nm or less, 180 nm or less, 170 nm or less, 160 nm or less, 150 nm or less, 140 nm or less, 130 nm or less, 120 nm or less, 110 nm or less, 100 nm or less, 90 nm or less, 80 nm or less, 70 nm or less, 60 nm or less, or 50 nm or less.

Further, the amorphous coating layer may be included in an amount of 0.1 to 3% by weight based on the total weight of the positive electrode active material. If the content of the amorphous coating layer is less than 0.1% by weight, side reactions between the positive electrode active material and the sulfide-based solid electrolyte may occur, and if the content is more than 3% by weight, this excessive content may act as a resistance component. Specifically, the content of the amorphous coating layer may be 0.1% by weight or more, 0.2% by weight or more, 0.3% by weight or more, 0.4% by weight or more, or 0.5% by weight or more, 3% by weight or less, 2.5% by weight or less, 2% by weight or less, 1.5% by weight or less, or 1% by weight or less.

In one example of the present disclosure, the particle diameter (D50) of the positive electrode active material may be 3 µm to 5 µm.

If the particle diameter (D50) of the positive electrode active material is less than 3 µm, the positive electrode active materials may agglomerate with each other or the electrode plate density may be reduced during positive electrode manufacturing, and if it exceeds 5 µm, the lithium mobility may be reduced. Specifically, the particle diameter (D50) of the positive electrode active material may be 3 µm or more, 3.1 µm or more, 3.2 µm or more, 3.3 µm or more, 3.4 µm or more, or 3.5 µm or more, and may be 5 µm or less, 4.9 µm or less, 4.8 µm or less, 4.7 µm or less, 4.6 µm or less, 4.5 µm or less, 4.4 µm or less, 4.3 µm or less, 4.2 µm or less, 4.1 µm or less, 4 µm or less, 3.9 µm or less, 3.8 µm or less, 3.7 µm or less, or 3.6 µm or less.

Further, the span ((D90-D10)/D50) of the positive electrode active material may be 0.7 or less. The term "span" refers to the width of the particle size distribution, and is a dimensionless value without units and simply indicates whether the distribution is narrow or broad.

If the span exceeds 0.7, lithium mobility may be degraded due to coarse or fine particulate positive electrode active material. Specifically, the span may be 0.7 or less, 0.6 or less, 0.5 or less, or 0.4 or less. The lower limit of the span is not particularly limited, but may be, for example, 0.1 or more or 0.2 or more.

The particle diameter (D50) of the positive electrode active material can be measured, for example, using a laser diffraction method. More specifically, the particle size (D50) of the positive electrode active material can be determined by dispersing the positive electrode active material in a dispersant, introducing it into a commercially available laser diffraction particle size measurement apparatus (e.g., Microtrac MT 3000), irradiating it with ultrasound at 28 kHz with a power of 60 W, and calculating the average particle size (D50) corresponding to 50% of the particle size distribution in the measurement apparatus.

In one example of the present disclosure, the positive electrode core active material in the form of primary and secondary particles included in the core particle comprises a lithium composite metal oxide capable of reversible intercalation and deintercalation of lithium.

The lithium composite metal oxide may comprise, in addition to lithium, nickel, cobalt, and a metal element M', wherein M' is at least one selected from the group consisting of Mn, Al, W, Cu, Fe, V, Cr, Ti, Zr, Zn, In, Ta, Y, La, Sr, Ga, Sc, Gd, Sm, Ca, Ce, Nb, Mg, B and Mo.

Specifically, the lithium composite metal oxide may be represented by Formula 1 below:

<Formula 1> Li_{α}NiₓCo_{y}M'_{z}O₂

wherein M' is at least one selected from the group consisting of Mn, Al, W, Cu, Fe, V, Cr, Ti, Zr, Zn, In, Ta, Y, La, Sr, Ga, Sc, Gd, Sm, Ca, Ce, Nb, Mg, B and Mo,
wherein α, x, y and z each represent the atomic fraction of independent elements, respectively, and may be 0.9≤α≤1.05, 0<x<1, 0<y<1, 0<z<1, x+y+z=1, or more specifically, 0.9≤α≤1.05, 0.6≤x<1, 0<y≤0.4, 0<z≤0.4, x+y+z=1, where α is the value before charging, and the composition of Formula 1 represents an average value.

More specifically, the core particle may be a lithium composite metal oxide containing a high content of nickel, such as LiNi_{0.6}Co_{0.2}Mn_{0.2}O₂, LiNi_{0.8}Mn_{0.1}Co_{0.1}O₂, LiNi_{0.6}Co_{0.2}Mn_{0.2}W_{0.02}O₂ or LiNi_{0.85}Co_{0.09}Mn_{0.045}Al_{0.015}O₂, at least one of which may be used.

Further, the core particle may be comprised in an amount of 97 to 99.9% by weight based on the total weight of the positive electrode active material. If the content of the core particle is less than 97% by weight, the battery performance may be deteriorated, and if it exceeds 99.9% by weight, the content of the amorphous coating layer is relatively reduced, which may cause side reactions with the solid electrolyte. Specifically, the content of the core particle may be 97% by weight or more, 97.5% by weight or more, 98% by weight or more, 98.5% by weight or more, or 99% by weight or more, 99.9% by weight or less, 99.8% by weight or less, 99.7% by weight or less, 99.6% by weight or less, or 99.5% by weight or less.

In the present disclosure, the porosity of the positive electrode active material may be 7% or less. The core particle included in the positive electrode active material includes a secondary particle agglomerated from the primary particles, so that pores may be formed between the agglomerated primary particles. The porosity of the positive electrode active material refers to the volume of the pores (% (v/v)) relative to the total volume of the positive electrode active material.

If the porosity of the positive electrode active material exceeds 7%, the porosity of the positive electrode active material layer and the positive electrode may increase, resulting in a decrease in the output of the all-solid-state battery. Specifically, the porosity of the positive electrode active material may be 7% or less, 6% or less, 5% or less, 4% or less, or 3% or less. The lower limit of the porosity is not particularly limited, but may be, for example, 1% or more or 2% or more.

### Method for Producing a Positive Electrode Active Material for All-Solid-State Batteries

The present disclosure also relates to a method of preparing a positive electrode active material for all-solid-state batteries.

A method of preparing a positive electrode active material for all-solid-state batteries according to the present disclosure includes the steps of (S1) mixing and stirring a transition metal salt, a chelating agent and a pH adjuster to form a precursor of the positive electrode core active material; (S2) adding a lithium raw material to the precursor of the positive electrode core active material and calcining it to form a secondary particle of the positive electrode core active material; and (S3) forming an amorphous coating layer on the surface of a core particle comprising the secondary particle. The amorphous coating layer may comprise a compound comprising at least two selected from the group consisting of Li, M, and O, wherein M comprises at least one selected from the group consisting of B, Zr, Nb, Ti, Al, W, P, Fe, C, N, Si, S, Co, Ge, Ga, Y and In.

Hereinafter, a method for preparing a positive electrode active material for all-solid-state batteries according to the present disclosure will be described in more detail by each step.

In one example of the present disclosure, in step (S1), the transition metal salt, chelating agent and pH adjuster may be mixed and stirred to form a precursor of the positive electrode active material.

The transition metal may comprise at least one selected from the group consisting of nickel, cobalt, and manganese.

Furthermore, the transition metal salt may comprise at least one selected from the group consisting of nitrate, sulfate and chloride salts of the transition metal. For example, the transition metal salt may include nickel nitrate, cobalt nitrate, and manganese nitrate.

Further, the chelating agent may be added to facilitate the deintercalation of the transition metal from the transition metal salt so that it can bind well with the lithium source. The chelating agent may comprise at least one selected from the group consisting of an aqueous solution of ammonia and an aqueous solution of ammonium sulfate.

In addition, the pH adjuster may comprise one or more selected from the group consisting of fumaric acid, glutaric acid, oxalic acid, malonic acid, succinic acid, maleic acid, palmitic acid, tartaric acid, formic acid, acetic acid, glycolic acid, sulfuric acid, hydrochloric acid, phosphoric acid, nitric acid, sulfonic acid, aminosulfonic acid, lithium hydroxide, and sodium hydroxide.

Furthermore, the porosity of the positive electrode active material produced can be adjusted depending on the stirring time. For example, shorter stirring time may increase the porosity of the positive electrode active material. Thus, the stirring time can be adjusted appropriately to ensure that the positive electrode active material has porosity in an appropriate range.

In one example of the present disclosure, in step (S2), a lithium raw material may be added to the precursor of the positive electrode active material and calcined to form a secondary particle of the positive electrode active material.

The lithium raw material may comprise at least one selected from the group consisting of lithium carbonate, lithium nitrate, lithium sulfate, lithium hydroxide, and lithium oxide.

In one example of the present disclosure, in step (S3), an amorphous coating layer may be formed on the surface of the core particle comprising the secondary particle. The coating may be performed by a wet coating method or a dry coating method.

In one example of the present disclosure, a wet coating method for forming an amorphous coating layer comprises the steps of (a1) mixing a raw material of an element (M) comprising at least one selected from the group consisting of B, Zr, Nb, Ti, Al, W, P and Fe and/or a lithium raw material in an alcohol-based solvent to obtain a first mixed solution for forming an amorphous coating layer; (a2) mixing a core particle comprising the secondary particle in the first mixed solution for forming an amorphous coating layer obtained in step (a1) above, to obtain a second mixed solution for forming a positive electrode active material; (a3) filter-pressing the second mixed solution for forming a positive electrode active material obtained in step (a2) above; (a4) drying the filter cake obtained in step (a3) above; and (a5) calcining the dried product obtained in step (a4) above.

In one example of the present disclosure, in step (a1), a raw material of an element (M) comprising at least one selected from the group consisting of B, Zr, Nb, Ti, Al, W, P and Fe and/or a lithium raw material may be mixed in an alcohol-based solvent to obtain a first mixed solution for forming an amorphous coating layer.

The raw material of the element (M) may comprise at least one selected from the group consisting of oxides, hydroxides, chlorides, fluorides, carbides and alkoxides of the element (M). For example, the raw material of the B above may comprise at least one selected from the group consisting of B₂O₃, H₃BO₃ and C₁₃H₁₉B0₃. The raw material of the Zr may comprise at least one selected from the group consisting of ZrO₂, Zr alkoxide, and Zr hydroxide. The raw material of the Nb may comprise at least one selected from the group consisting of niobium fluoride, niobium chloride and niobium carbide. The raw material of the Ti may comprise at least one selected from the group consisting of TiO₂, titanium ethoxide, and tetrabutyl titanate.

Further, the lithium raw material may comprise at least one selected from the group consisting of lithium carbonate, lithium nitrate, lithium sulfate, lithium hydroxide, and lithium oxide. For example, the lithium raw material may comprise LiOH or Li₂CO₃.

The alcohol-based solvent may comprise at least one alcohol-based compound having 1 to 4 carbon atoms. Specifically, the alcohol-based solvent may comprise one or more selected from the group consisting of acetone, methanol, ethanol, isopropyl alcohol, butyl alcohol, octyl alcohol, and allyl alcohol. In consideration of the processability in the positive electrode active material manufacturing process and the formability of the amorphous coating layer on the finally manufactured positive electrode active material, the alcohol-based solvent may be ethanol.

In one example of the present disclosure, in step (a2), a second mixed solution for forming a positive electrode active material may be obtained by mixing the core particle comprising the secondary particle in the first mixed solution for forming an amorphous coating layer obtained in step (a1) above.

The types and content of the core particle are as described above.

In one example of the present disclosure, in step (a3), the second mixed solution for forming a positive electrode active material obtained in step (a2) above may be filter-pressed.

The filter-pressing may be a process of removing the alcohol-based solvent by pressurizing the second mixed solution for forming a positive electrode active material to 0.3 to 1 MPa. For example, the pressurization may be performed by air blowing, and the alcohol-based solvent may be removed by pressurization with air blowing for 5 to 15 minutes. Further, filter-pressing using a filter-press apparatus may remove an alcohol-based solvent from the second mixed solution comprising the coating material and the core particle. The filter-press apparatus is not particularly limited as long as it is commonly used in the art and capable of effectively removing an alcohol-based solvent.

By the filter-pressing, the alcohol-based solvent can be removed from the second mixed solution in a short time, thereby minimizing the time the core particle is exposed to the liquid.

The filter cake obtained after the filter-pressing is in the form of raw material of element (M) and/or lithium raw material adsorbed on the surface of the core particle, and may contain a trace amount of an alcohol-based solvent. The filter cake may be in the form of a positive electrode active material with an amorphous coating layer formed on the surface of the core particle.

Further, the removed alcohol-based solvent can be recycled by recovering and adding it to the second mixed solution for forming a positive electrode active material. The alcohol-based solvent removed from the second mixed solution also contains residues of the raw material of element (M), the lithium raw material and/or the core particle, thereby improving the yield upon recycling.

Furthermore, the process of recovering the removed alcohol-based solvent to the second mixed solution for forming a positive electrode active material may be performed twice or more, and as the number of times increases, the uniformity of the amorphous coating layer may be improved. There is no specific upper limit on the number of repetitions, but for processability, the process may be performed three times or less, four times or less, or five times or less.

In one example of the present disclosure, in step (a4), the filter cake obtained in step (a3) above may be dried.

The alcohol-based solvent may be completely removed by the drying.

The drying temperature is not particularly limited as long as it is capable of removing an alcohol-based solvent. For example, the drying may be performed at 80°C to 120°C. If the drying temperature is below 80°C, the alcohol-based solvent may not be completely removed, and if it is above 120°C, the raw material properties may be denatured and the performance of the prepared positive electrode active material may be reduced. Specifically, the drying temperature may be 80°C or higher, 85°C or higher, or 90°C or higher, and may be 120°C or lower, 115°C or lower, or 110°C or lower.

The dried product obtained after the drying is in a state in which the raw material of element (M) and the lithium raw material are adsorbed on the surface of the core particle.

In one example of the present disclosure, in step (a5), the dried product obtained in step (a4) above may be calcined.

The calcination temperature may be adjusted depending on the type of the raw material of element (M), for example, 200°C to 650°C. If the calcination temperature is below 200°C, the raw materials may not react sufficiently and may remain weakly bound to the positive electrode active material, and if the calcination temperature exceeds 650°C, Li may be deintercalated from the structure of the positive electrode active material due to the high calcination temperature, leading to decrease in structural stability and crystallization. Specifically, the calcination temperature may be 200°C or higher, 250°C or higher, 300°C or higher, 350°C or higher, or 400°C or higher, or may be 650°C or lower, 600°C or lower, 550°C or lower, or 500°C or lower.

Thereafter, the calcined positive electrode active material can be milled. By the milling, the particle diameter of the positive electrode active material can be adjusted. For example, the particle diameter may increase as the milling time decreases.

In one example of the present disclosure, the dry coating method for forming an amorphous coating layer may be performed by atomic layer deposition (ALD), or by heat treatment after mechanical mixing.

The atomic layer deposition is a process in which a raw material for forming an amorphous coating layer on the surface of the core particle is deposited on the surface of the core particle by atomic layer deposition to form an amorphous coating layer.

Further, the heat treatment after mechanical mixing is a process of mixing the core particle and a raw material for forming an amorphous coating layer, and then heat treating it to form an amorphous coating layer.

The raw material for forming an amorphous coating layer may comprise a raw material of element (M) comprising at least one selected from the group consisting of B, Zr, Nb, Ti, Al, W, P and Fe as described above, and/or a lithium raw material.

### Positive Electrode for All-solid-state Batteries

The present disclosure also relates to a positive electrode for all-solid-state batteries comprising the above positive electrode active material.

A positive electrode for all-solid-state batteries according to the present disclosure includes a positive electrode current collector; and a positive electrode active material layer formed on one side of the positive electrode current collector. The positive electrode active material layer includes a positive electrode active material as described above, a sulfide-based solid electrolyte, a binder, and a conductive material.

In one example of the present disclosure, since the porosity of the positive electrode active material is limited to 7% or less, the porosity of the positive electrode may be 18% or less.

The positive electrode active material according to one example of the present disclosure is as described above.

Further, the positive electrode active material may be included in an amount of 50 to 90% by weight based on the total weight of the positive electrode active material layer. Specifically, the content of the positive electrode active material may be 50% by weight or more, 55% by weight or more, or 60% by weight or more, and may be 90% by weight or less, 85% by weight or less, 80% by weight or less, 75% by weight or less, or 70% by weight or less. If the content of the positive electrode active material is less than 50% by weight, the battery performance may be reduced, and if the content exceeds 90% by weight, the mass transfer resistance may be increased.

In one example of the present disclosure, the sulfide-based solid electrolyte is a solid electrolyte containing sulfur, which can improve the ionic conductivity.

The sulfide-based solid electrolyte may comprise at least one selected from the group consisting of LiPSX (wherein X is Cl, Br, or I), LiGePS, and LiPS. However, the sulfide-based solid electrolyte is not limited to these compounds, and a wide range of sulfide-based solid electrolytes conventionally used in the art may be used.

Further, the sulfide-based solid electrolyte may be in the form of particles having a particle diameter (D50) of 0.1 µm to 1.5 µm. Specifically, the particle diameter (D50) of the sulfide-based solid electrolyte may be 0.1 µm or more, 0.3 µm or more, or 0.5 µm or more, and may be 0.9 µm or less, 1.0 µm or less, 1.2 µm or less, or 1.5 µm or less. If the particle diameter (D50) of the sulfide-based solid electrolyte is less than 0.1 µm, the ultra-fine sulfide-based solid electrolyte particles may not be sufficiently dispersed in the positive electrode active material layer and may agglomerate, and if it exceeds 1.5 µm, the dispersion may be somewhat easier, but the contact surface with the positive electrode active material particles may be reduced and the positive electrode porosity may increase.

Further, the sulfide-based solid electrolyte may be included in an amount of 5 to 30% by weight based on the total weight of the positive electrode active material layer. Specifically, the content of the sulfide-based solid electrolyte may be 5% by weight or more, 8% by weight or more, 10% by weight or more, 13% by weight or more, 15% by weight or more, or 18% by weight or more, or may be 30% by weight or less, 28% by weight or less, 25% by weight or less, or 22% by weight or less. If the content of the sulfide-based solid electrolyte is less than 5% by weight, the ionic conductivity may be reduced, and if it exceeds 30% by weight, the content of the positive electrode active material and the conductive material may be relatively reduced, resulting in a decrease in battery performance.

In one example of the present disclosure, the binder may be included to facilitate cohesion between the materials contained in the positive electrode active material layer and cohesion between the positive electrode active material layer and the positive electrode current collector.

The binder may comprise at least one selected from the group consisting of polytetrafluoroethylene (PTFE), polyethylene, polypropylene, ethylene/propylene copolymer, polybutadiene, polyethylene oxide, chlorosulfonated polyethylene, polyvinylpyrrolidone, polyvinylpyridine, polyvinyl alcohol, polyvinyl acetate, polyepichlorohydrin, polyphosphazene, polyacrylonitrile, polystyrene, latex, acrylic resin, phenolic resin, epoxy resin, carboxymethyl cellulose, hydroxypropyl cellulose, cellulose acetate, cellulose acetate butyrate, cellulose acetate propionate, cyanoethyl cellulose, cyanoethyl sucrose, polyester, polyamide, polyether, polyimide, polycarboxylate, polycarboxylic acid, polyacrylic acid, polyacrylate, lithium polyacrylate, polymethacrylic acid, polymethacrylate, polyacrylamide, polyurethane, polyvinylidene fluoride, and poly(vinylidene fluoride-co-hexafluoropropene). Preferably, the binder may comprise polytetrafluoroethylene (PTFE).

Further, the binder may be included in an amount of 0.1 to 3% by weight based on the total weight of the positive electrode active material layer. Specifically, the content of the binder may be 0.1% by weight or more, 0.5% by weight or more, 0.8% by weight or more, or may be 3% by weight or less, 2% by weight or less, or 1.5% by weight or less. If the content of the binder is less than 0.1% by weight, the effect of improving cohesion between the materials contained in the positive electrode active material layer may be insufficient and the positive electrode active material layer may not be formed properly, and if the content exceeds 3% by weight, the ionic conductivity or electronic conductivity may be reduced.

In one example of the present disclosure, the conductive material can form a path for conducting electrons, thereby improving electronic conductivity.

The conductive material may be a linear conductive material, wherein the linear conductive material may be at least one selected from the group consisting of carbon nanotube (CNT) and carbon nanofiber (CNF). The linear conductive material can improve electrical conductivity due to its morphological characteristics. For example, the linear conductive material may have an aspect ratio (length/diameter) of 2 or more, and specifically, 2 or more, 5 or more, 10 or more, 20 or more, 30 or more, 40 or more, 50 or more, or 100 or more. If the aspect ratio is less than 2, it is difficult to form an electron conduction path, which can lead to a decrease in electronic conductivity. Further, the upper limit of the aspect ratio is not particularly limited, but may be 300 or less, 400 or less, 500 or less, 600 or less, or 700 or less, for ease of forming an electronic conduction path.

Further, the conductive material may be included in an amount of 1 to 10% by weight based on the total weight of the positive electrode active material layer. Specifically, the content of the conductive material may be 1% by weight or more, 2% by weight or more, or 3% by weight or more, or may be 6% by weight or less, 7% by weight or less, 8% by weight or less, 9% by weight or less, or 10% by weight or less. If the content of the conductive material is less than 1% by weight, the electrical conductivity of the positive electrode may be degraded, and if it exceeds 10% by weight, the content of the positive electrode active material and the sulfide-based solid electrolyte may be relatively reduced, resulting in a deterioration of the battery performance.

In one example of the present disclosure, the thickness of the positive electrode active material layer may be 100 µm to 300 µm, more specifically, may be 100 µm or more, 110 µm or more, 120 µm or more, or may be 200 µm or less, 250 µm or less, or 300 µm or less. However, the thickness of the positive electrode active material layer is not limited thereto, and depending on the composition of the positive electrode active material layer, the thickness can be adjusted to have a positive electrode loading such that the ratio of ionic conductivity to electronic conductivity is between 0.8 and 1.2.

In one example of the present disclosure, the positive electrode current collector supports the positive electrode active material layer and serves to transfer electrons between the outer wire and the positive electrode active material layer.

The positive electrode current collector is not particularly limited as long as it has a high electronic conductivity without causing chemical changes in an all-solid-state battery. For example, stainless steel, aluminum, nickel, titanium, palladium, calcined carbon, stainless steel whose surface is treated with carbon, nickel, or silver, aluminum-cadmium alloy, and the like may be used as the positive electrode current collector.

The positive electrode current collector may have a microscopic uneven structure on the surface of the positive electrode current collector or adopt a three-dimensional porous structure to strengthen the binding with the positive electrode active material layer. Accordingly, the positive electrode current collector may comprise various forms such as film, sheet, foil, mesh, net, porous material, foam, nonwoven material, and the like.

### All-Solid-State Battery

The present disclosure also relates to an all-solid-state battery comprising the positive electrode.

An all-solid-state battery according to the present disclosure includes the positive electrode, a negative electrode, and a sulfide-based solid electrolyte film interposed therebetween. The positive electrode is as described above.

In one example of the present disclosure, the negative electrode comprises a negative electrode active material layer, wherein the negative electrode active material layer may be formed on one side of the negative electrode current collector. The negative electrode active material layer may include a negative electrode active material and a conductive material.

The negative electrode active material may comprise a material capable of reversibly intercalating or deintercalating lithium (Li⁺), a material capable of reacting with lithium ions to reversibly form a lithium-containing compound, a lithium metal, or a lithium alloy.

The material where the lithium ions (Li⁺) can be reversibly inserted or removed can be, for example, crystalline carbon, amorphous carbon, or a mixture thereof. The material capable of reacting with the lithium ions (Li⁺) to reversibly form a lithium-containing compound may be, for example, tin oxide, titanium nitrate, or silicon. The lithium alloy may be, for example, an alloy of lithium (Li) and a metal selected from the group consisting of indium (In), sodium (Na), potassium (K), rubidium (Rb), cesium (Cs), francium (Fr), beryllium (Be), magnesium (Mg), calcium (Ca), strontium (Sr), barium (Ba), radium (Ra), aluminum (Al), and tin (Sn).

Preferably, the negative electrode active material may be a lithium metal or a lithium-indium alloy (Li-In), more specifically, it may be in the form of a lithium metal or a lithium thin film or a lithium-indium alloy thin film or powder.

The negative electrode active material may be comprised in an amount of 40 to 80% by weight based on the total weight of the negative electrode active material layer. Specifically, the content of the negative electrode active material may be 40% by weight or more, 50% by weight or more, or may be 70% by weight or less, or 80% by weight or less. If the content of the negative electrode active material is less than 40% by weight, the connectivity between the wet negative electrode active material layer and the dry negative electrode active material layer may be insufficient, and if the content exceeds 80% by weight, the mass transfer resistance may be greater.

Furthermore, the conductive material is not particularly limited as long as it prevents side reactions in the internal environment of an all-solid-state battery and provides excellent electrical conductivity without causing chemical changes in the battery. Representative examples may include graphite or conductive carbon, such as natural graphite or artificial graphite; carbon blacks such as acetylene black, ketjen black, denka black, thermal black, channel black, furnace black, lamp black, and the like; carbon-based materials having a crystal structure of graphene or graphite; conductive fibers, such as carbon fibers or metal fibers; carbon fluorides; metal powders, such as aluminum powder or nickel powder; conductive whiskers, such as zinc oxide, potassium titanate, and the like; conductive oxides, such as titanium oxide; and conductive polymers, such as polyphenylene derivatives. These materials may be used alone or in a mixture of two or more of the foregoing, without being limited thereto. Preferably, the conductive material may comprise a vapor-grown carbon fiber (VGCF).

Further, the conductive material may be comprised in an amount of 1% by weight to 5% by weight based on the total weight of the negative electrode active material layer, and more specifically, 1% by weight or more, 1.5% by weight or more, 2% by weight or more, or 4% by weight or less, 4.5% by weight or less, or 5% by weight or less. If the content of the conductive material is too low, i.e., less than 1% by weight, it may be difficult to achieve an improvement in electrical conductivity or the electrochemical properties of the battery may be deteriorated, and if it is too high, i.e., more than 5% by weight, the relative amount of negative electrode active material decreases, resulting in a reduction in capacity and energy density. The method of incorporating the conductive material into the negative electrode is not substantially limited, and any conventional method known in the art can be used, such as mixing with or coating the negative electrode active material.

Furthermore, the negative electrode current collector is not particularly limited as long as it has a conductivity without causing chemical changes in the battery, for example, copper, stainless steel, aluminum, nickel, titanium, calcined carbon, copper or stainless steel whose surface is treated with carbon, nickel, or silver, aluminum-cadmium alloy, and the like can be used. Also, like the positive electrode current collector, the negative electrode current collector can be in various forms, such as a film, sheet, foil, net, porous material, foam, nonwoven material, and the like, with fine irregularities formed on the surface.

The method of manufacturing a negative electrode is not particularly limited, and a negative electrode can be manufactured by forming a negative electrode active material layer on the negative electrode current collector using a conventional method of forming a layer or a film in the art. For example, methods such as pressing, coating, or deposition can be utilized. The negative electrode of the present disclosure also includes a case in which a metallic lithium thin film is formed on a metal plate by initial charging after assembling the battery without a lithium thin film on the negative electrode current collector.

In one example of the present disclosure, the sulfide-based solid electrolyte included in the sulfide-based solid electrolyte film may comprise at least one selected from the group consisting of LiPSX (wherein X is Cl, Br or I), LiGePS, and LiPS. However, the sulfide-based solid electrolyte is not limited to these compounds, and a wide range of sulfide-based solid electrolytes conventionally used in the art may be used.

### Battery Module

The present disclosure also relates to a battery module comprising the all-solid-state battery as a unit cell, a battery pack comprising the battery module, and a device comprising the battery pack as a power source.

Specific examples of the device may include, but are not limited to, a power tool powered by an electric motor; an electric vehicle, including an electric vehicle (EV), a hybrid electric vehicle (HEV), a plug-in hybrid electric vehicle (PHEV), and the like; an electric two-wheeled vehicle, including an electric bicycle (E-bike) and an electric scooter (E-scooter); an electric golf cart; a power storage system; and the like.

### [Mode for Practicing the Invention]

Hereinafter, preferred examples of the present disclosure are described for the purpose of illustrating the present disclosure, but it will be apparent to those skilled in the art that various changes and modifications are possible within the scope of the present disclosure and the technical idea, and that such changes and modifications fall within the scope of the appended patent claims.

In the following examples and comparative examples, positive electrode active materials having an amorphous coating layer were prepared according to the requirements as set forth in Table 1 below.

**[Table 1]**

| | Positive electrode active material | | | |
|---|---|---|---|---|
| | Material | D50 (µm) | Amorphous coating layer formation | Porosity (%) |
| Example 1 | NCM811 | 3.72 | o | 2.4 |
| Example 2 | NCM811 | 3.63 | o | 7 |
| Example 3 | NCM811 | 3.61 | o | 11 |
| Example 4 | NCM811 | 7.52 | o | 2.4 |
| Comparative Example 1 | NCM811 | 3.84 | X | 6 |
| Comparative Example 2 | NCM811 | 3.84 | X (a crystalline coating layer is formed) | 2.4 |

### Example 1

### (1) Forming the precursor of a positive electrode core active material

The precursor of a positive electrode active material was prepared by mixing and stirring a transition metal salt including nickel nitrate, cobalt nitrate and manganese nitrate, an aqueous solution of ammonia as a chelating agent and fumaric acid as a pH adjuster.

### (2) Forming a core particle containing a secondary particle

Lithium carbonate as a lithium raw material was added to the precursor of a positive electrode active material and calcined to prepare a core particle containing NCM811 in the form of a secondary particle.

### (3) Forming an amorphous coating layer

H₃BO₃ and Li₂CO₃ as raw materials for the amorphous coating layer were mixed in ethanol, an alcohol-based solvent, to obtain a first mixed solution for forming an amorphous coating layer.

By mixing the core particle in the first mixed solution, a second mixed solution for forming a positive electrode active material was obtained. Further, the solids content in the second mixed solution is 50% by weight, wherein the solids means the weight of the raw material of the amorphous coating layer, except for the alcohol-based solvent, and the core particle. Further, the weight ratio of the raw material of the amorphous coating layer and the core particle was 0.5 : 99.5.

By filter-pressing the second mixed solution to remove the alcohol-based solvent, a positive electrode active material in which an amorphous coating layer was formed on the surface of the core particle was obtained.

The positive electrode active material was dried in a vacuum oven at 100°C for 12 hours to completely remove the alcohol-based solvent.

The dried positive electrode active material was then calcined at 400°C for 9 hours. The positive electrode active material was then milled.

As measured by a particle size analyzer (Mastersizer 3000+ pro), it was confirmed that the particle diameter (D50) of the prepared positive electrode active material was 3.72 µm and the span was 0.5. Furthermore, the porosity of the positive electrode active material prepared above was analyzed by analyzing a cross-sectional image taken by a scanning electron microscope (SEM) by using an image analysis program (Image J, NIH), and was found to be 2.4%.

### Example 2

The same method was performed as in Example 1, except that the stirring time of the first mixed solution and the core particle was relatively shorter compared to Example 1.

Measured in the same manner as in Example 1, the porosity of the positive electrode active material was found to be 7%, and the particle diameter (D50) of the positive electrode active material was found to be 3.63 µm.

### Example 3

The same method was performed as in Example 1, except that the stirring time of the first mixed solution and the core particle was relatively shorter compared to Example 2.

Measured in the same manner as in Example 1, the porosity of the positive electrode active material was found to be 11%, and the particle diameter (D50) of the positive electrode active material was found to be 3.61 µm.

### Example 4

The same method was performed as in Example 1, except that the stirring time of the first mixed solution and the core particle was relatively longer and the milling time was shorter compared to Example 1.

Measured in the same manner as in Example 1, the porosity of the positive electrode active material was found to be 2.4%, and the particle diameter (D50) of the positive electrode active material was found to be 7.52 µm.

### Comparative Example 1

The same method was performed as in Example 1, except that the coating layer was not formed.

Measured in the same manner as in Example 1, the porosity of the positive electrode active material was found to be 6%, and the particle diameter (D50) of the positive electrode active material was found to be 3.84 µm.

### Comparative Example 2

The same method was used as in Example 1, except that TiO₂was used instead of H₃BO₃ as the raw material for the coating layer to form a crystalline coating layer, and the dried positive electrode active material was calcined at 700 °C for 6 hours.

### Experimental Example 1: Evaluating performance

To evaluate the performance of the all-solid-state batteries with positive electrode active materials prepared in the Examples and Comparative Examples, charge and discharge experiments were conducted in a pressed cell. The pressed cell consists of a positive electrode, an electrolyte, and a negative electrode stacked inside the mold. As a method of manufacturing a cell, a positive electrode composite was prepared by mixing the positive electrode active material, Super-P (manufacturer: Imerys) as a conductive material, and a sulfide-based solid electrolyte of Li₂S-P₂S₅ in a weight ratio of 70:25:5. The counter electrode (negative electrode) was Li-In. The cell for an all-solid-state battery was manufactured as follows. A sulfide-based solid electrolyte of Li₂S-P₂S₅ was placed in the mold and pressurized to form a solid electrolyte layer. The positive electrode active material composite was then applied to one side of the solid electrolyte layer, and the negative electrode was stacked on the other side, further pressurized, and the electrode assembly was fabricated. The fabricated electrode assembly was placed inside the battery case to manufacture an all-solid-state battery. The initial capacity and rate characteristics of the fabricated all-solid-state battery were measured as follows.

### (1) Measuring initial capacity

The fabricated all-solid-state battery was charged (CC/CV) to 4.25 V at a current density of 0.1 C-rate using a charger/discharger and the charging was terminated when the current density reached 0.05 C-rate. The discharging (CV) was conducted to 3.0 V at a current density of 0.1 C-rate, and then the initial capacity was measured.

### (2) Measuring rate capability

The battery was charged at 0.1C under CC/CV conditions, and discharged at 0.33C/0.5C/1.0C to obtain the rate capability.

Table 2 below shows the results of the above experiment.

**[Table 2]**

| | Charge (mAh/g) | Discharge (mAh/g) | Initial coulombic efficiency (%) | 1C retention(%) |
|---|---|---|---|---|
| Example 1 | 220 | 196 | 89% | 97.18% |
| Example 2 | 218 | 194 | 89% | 96.69% |
| Example 3 | 218 | 193 | 89% | 93.12% |
| Example 4 | 215 | 194 | 90% | 93.03% |
| Comparative Example 1 | 227 | 194 | 85% | 88.97% |
| Comparative Example 2 | 220 | 200 | 91% | 91.02% |

As a result, as shown in Table 2 above, both Example 1 and Example 2 exhibit good charge/discharge capacity, initial Coulombic efficiency, and 1C output characteristics. It can be seen that Example 3 has a somewhat higher porosity of the positive electrode active material compared to Examples 1 and 2, resulting in poor 1C output characteristics. In addition, Example 4 shows a somewhat higher particle diameter (D50) of the positive electrode active material compared to Examples 1 and 2, resulting in poor 1C output characteristics.

Furthermore, it was confirmed that Comparative Example 1 comprising a positive electrode active material comprising a core particle without a coating layer exhibits a higher charging capacity due to the side reaction between the core particle of the positive electrode active material and a solid electrolyte, a decrease in the Coulombic efficiency due to the small decrease in the discharging capacity, and poor 1C output characteristics due to the low conductivity of the interfacial side reaction layer formed by the side reaction.

Further, it was confirmed that Comparative Example 2 comprising a positive electrode active material comprising a crystalline coating layer formed on the surface of the core particle exhibits poor 1C output characteristics. The crystalline coating layer is formed due to the relatively high calcination temperature.

### Experimental Example 2: Confirming whether an amorphous coating layer was formed

To confirm the formation of an amorphous coating layer, X-ray diffraction (XRD) analysis was performed on the positive electrode active material prepared in Example 1.

FIG. 2 is an X-ray diffraction (XRD) graph of a positive electrode active material according to Example 1 of the present invention.

Referring to FIG. 2, a coating layer comprising lithium titanate oxide (LTO) was formed on the NCM core particle, and no peak was detected for LTO, indicating that the coating layer was amorphous.

### [Reference Numerals]

10: Positive electrode active material
11: Core particle
11a: Primary particle, 11b: Secondary particle
12: Amorphous coating layer
20: Solid electrolyte

## Claims

1. A positive electrode active material for an all-solid-state batterie comprising a core particle; and an amorphous coating layer located on a surface of the core particle,
wherein the core particle is in the form of a secondary particle agglomerated from a plurality of positive electrode core active materials in the form of a primary particle,
wherein the amorphous coating layer comprises a compound comprising at least two selected from the group consisting of Li, M, and O, wherein M comprises at least one selected from the group consisting of B, Zr, Nb, Ti, Al, W, P, Fe, C, N, Si, S, Co, Ge, Ga, Y and In.

2. The positive electrode active material for the all-solid-state batterie according to claim 1,
wherein the compound comprises at least one selected from the group consisting of LiO, MO, LiM, and LiMO.

3. The positive electrode active material for the all-solid-state batterie according to claim 1,
wherein the amorphous coating layer has a thickness of 5 nm to 200 nm.

4. The positive electrode active material for the all-solid-state batterie according to claim 1,
wherein the particle diameter D50 of the positive active material for all-solid-state batteries is 3 µm to 5 µm.

5. The positive electrode active material for the all-solid-state batterie according to claim 1,
wherein a span (D90-D10)/D50 of the positive electrode active material for all-solid-state batteries is 0.7 or less.

6. The positive electrode active material for the all-solid-state batterie according to claim 1,
wherein the positive electrode core active material comprises a lithium composite metal oxide.

7. The positive electrode active material for the all-solid-state batterie according to claim 1,
wherein a porosity of the positive electrode active material for all-solid-state batteries is 7% or less.

8. A positive electrode for an all-solid-state batterie comprising a positive electrode active material for all-solid-state batteries according to any one of claims 1 to 7.

9. The positive electrode for the all-solid-state batterie according to claim 8,
wherein the positive electrode comprises the positive electrode active material, a sulfide-based solid electrolyte, a binder, and a conductive material.

10. An all-solid-state battery comprising a positive electrode according to claim 8, a negative electrode, and a sulfide-based solid electrolyte film interposed therebetween.
